# EUROPÄISCHE PATENTSCHRIFT

(11) **EP 0 725 989 B1**
(45) Veröffentlichungstag und Bekanntmachung des Hinweises auf die Patenterteilung: **07.05.1997**
(21) Anmeldenummer: 94930968.6
(22) Anmeldetag: 21.10.1994
(51) Int. Cl.: H02B 1/30

(54) **RAHMENGESTELL FÜR EINEN SCHALTSCHRANK**
FRAME FOR A SWITCHGEAR CUBICLE
BATI POUR ARMOIRE DE DISTRIBUTION

(30) Priorität: 25.10.1993 DE 4336285
(43) Veröffentlichungstag der Anmeldung: 14.08.1996
(60) Teilanmeldung: 96113508.4
(73) Patentinhaber: Rittal-Werk Rudolf Loh GmbH & Co. KG, 35745 Herborn (DE)
(72) Erfinder: BESSERER, Horst, D-35745 Herborn (DE); MÜNCH, Udo, D-35764 Sinn (DE); NEUHOF, Markus, D-35630 Ehringshausen (DE); NICOLAI, Walter, D-35418 Buseck (DE); PAWLOWSKI, Adam, D-35690 Dillenburg (DE); SCHÜLER, Matthias, D-35716 Dietzhölztal (DE); STRACKBEIN, Heinrich, D-35444 Biebertal (DE)
(74) Vertreter: Fleck, Hermann-Josef, Dr.-Ing.
(86) Internationale Anmeldenummer: EP9403470
(87) Internationale Veröffentlichungsnummer: WO9512232

(56) Entgegenhaltungen:
- EP-A- 0 402 276
- DE-U- 9 116 634
- FR-A- 2 669 473

## Beschreibung

Die Erfindung betrifft ein Rahmengestell für einen Schaltschrank, das aus Rahmenschenkeln zusammensetzbar oder zusammengesetzt ist, bei dem an den vertikalen Rahmenschenkeln Scharnierelemente und Schließelemente für Schranktüren anbringbar oder angebracht sind und zumindest die vertikalen Rahmenschenkel (10) zwei den angrenzenden beiden Außenseiten des Rahmengestelles zugekehrte Profilseitenabschnitte aufweisen, die im gemeinsamen Eckbereich über einen Übergangsabschnitt ineinander übergehen, welcher senkrecht zur Diagonale zwischen den beiden Profilseitenabschnitte steht.

Ein Rahmengestell dieser Art ist in der DE-U 9 116 634 angegeben, wobei jedoch keine Aussage zu einer Anbringung von Scharnierelementen oder Schließelementen gemacht ist. Der senkrecht zur Diagonale stehende Übergangsabschnitt geht bei diesem bekannten Rahmengestellt jeweils über einen senkrecht zu dem zugeordneten Profilseitenabschnitt stehenden Verbindungsabschnitt in den entsprechenden Profilabschnitt über. Eine Abdichtung von Türen, Seitenwänden oder bei einer Anreihung angrenzenden Rahmengestellen muß dabei an den Profilabschnitten vorgenommen werden.

Bei einem weiteren Schaltschrank, wie er in der DE 33 44 598 C1 offenbart ist, bilden die beiden Profilseiten, welche parallel zu den senkrecht aufeinanderstoßenden Seiten des Rahmengestelles stehen, bei den verwendeten Rahmenschenkeln eine Außeneckkante. Die Scharnierelemente und Schließelemente sind dabei an einer der Profilseiten mit dem abstehenden Dichtungs- oder Anlagesteg verbunden. Dies bedingt, daß nur die Vorder- und/oder Rückseite des Rahmengstelles mit einer Schranktür verschlossen werden kann.

Bei einem in der FR-A- 2 669 473 gezeigten Rahmengstell ist ein senkrecht zu einer Diagonalen stehender Übergangsabschnitt zwischen zwei senkrecht zueinander verlaufenden Profilseiten relativ schmal ausgebildet und wie die Profilseiten zum Innern des Rahmengestells gekehrt. Zum Anbringen von Scharnier- und Schließelementen dient dieser Übergangsabschnitt nicht.

Es ist Aufgabe der Erfindung, ein Rahmengestell der eingangs erwähnten Art so zu gestalten, daß wahlweise Vorder- und/oder Rückseite oder die eine und/oder andere Seite des Rahmengstelles mit Schranktüren verschlossen werden kann und daß eine gute Abdichtungsmöglichkeit auf den Außenseiten geschaffen wird.

Diese Aufgabe wird nach der Erfindung durch die Merkmale des Anspruchs 1 gelöst.

Damit wird in den Außeneckbereichen der vertikalen Rahmenschenkel des Rahmengestelles eine Aufnahme geschaffen, in der die Scharnier- und Schließelemente untergebracht werden können. Da diese Aufnahme symmetrisch zu der Diagonalen ist, kann eine Schranktür wahlweise so angeschlagen oder in der Schließstellung gehalten werden, daß die eine oder andere Profilseite der Schranktür bzw. dem Wandelement zugekehrt ist. Dabei brauchen die Scharnier- und Schließelemente nur um 180° verdreht am Übergangsabschnitt des Rahmenschenkels angebracht zu werden.

Die Aufnahme am Rahmenschenkel läßt sich nach einer einfachen Ausgestaltung dadurch vergrößern, daß der Übergangsabschnitt selbst über jeweils einen senkrecht zu dem zugeordneten Profilseitenabschnitt stehenden Verbindungsabschnitt in die Profilseitenabschnitte übergeht.

Nach einer Ausgestaltung ist vorgesehen, daß die Rahmenschenkel als offenes, zur Diagonale symmetrisches Hohlprofil ausgebildet sind, wobei bevorzugt zur Stabilitätserhöhung des Rahmenschenkels vorgesehen ist, daß die dem Übergangsabschnitt abgekehrten Enden der Profilseitenabschnitte jeweils in zwei rechtwinklig nach innen und einen rechtwinklig nach außen abgebogenen Endabschnitt auslaufen, wobei die nach außen abgebogenen Endabschnitte im gleichen Abstand zur Diagonale enden.

Die Rahmenschenkel können jedoch auch als geschlossenes, zur Diagonale symmetrisches Profil ausgebildet sein. Dabei kann zum einen vorgesehen sein, daß die dem Übergangsabschnitt abgekehrten Enden der Profilseitenabschnitte über jeweils einen rechtwinklig nach innen gebogenen Endabschnitt und einen diese verbindenden Verbindungsabschnitt miteinander verbunden sind und zum anderen, daß die dem Übergangsabschnitt abgekehrten Enden der Profilseitenabschnitte über jeweils zwei rechtwinklig nach innen abgebogene Endabschnitte miteinander verbunden sind.

Um Einbaumöglichkeiten für Einbauten zu schaffen, sieht eine Ausgestaltung vor, daß die Endabschnitte und/oder der Verbindungsabschnitt mit Reihen von Befestigungsaufnahmen versehen sind.

Damit an die Rahmenschenkel auf einfache Weise Scharnier- und Schließelemente angebracht werden können, ist auch der Übergangsabschnitt mit Befestigungsaufnahmen versehen.

Die Erfindung wird anhand von in den Zeichnungen jeweils im Teilschnitt dargestellten Ausführungsbeispielen näher erläutert. Es zeigen:
- Fig. 1: im Querschnitt einen als offenes Hohlprofil ausgebildeten Rahmenschenkel mit der Scharnierseite einer Schranktür und einem Wandelement,
- Fig. 2: im Querschnitt denselben Eckbereich eines Schaltschrankes mit einem als geschlossenes Hohlprofil ausgebildeten Rahmenschenkel und
- Fig. 3: im Querschnitt denselben Eckbereich eines Schaltschrankes mit einem anderen, als geschlossenes Hohlprofil ausgebldeten Rahmenschenkel.

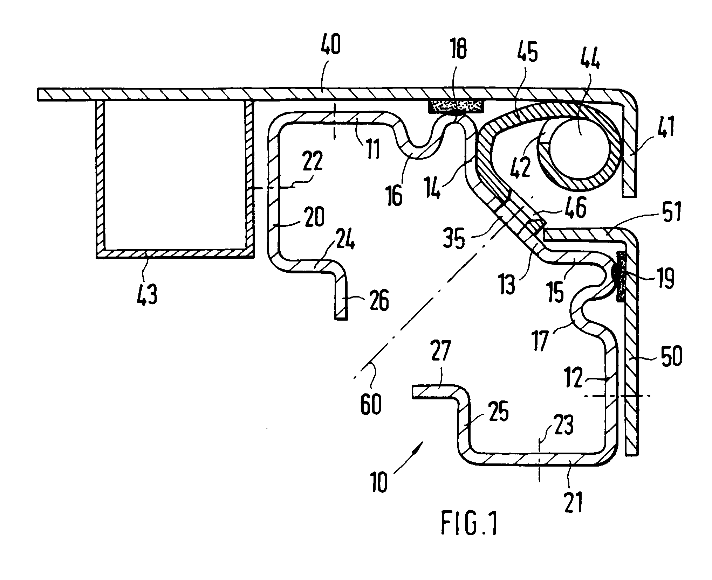

In Fig. 1 ist ein vertikaler Rahmenschenkel 10 eines Rahmengestelles gezeigt, der mit seinen äußeren Profilseitenabschnitten 11 und 12 parallel zu den senkrecht zueinander stehenden Seiten des Schaltschrankes ausgerichtet ist. Diese beiden Profilseitenabschnitte 11 und 12 sind über den Übergangsabschnitt 13 miteinander verbunden, welcher senkrecht zu der Diagonalen 60 zwischen den beiden Profilseitenabschnitten 11 und 12 verläuft. Damit wird keine Außeneckkante sondern ein Aufnahmeraum mit einem etwa dreieckförmigen Querschnitt geschaffen, in dem Scharnierelemente 45 oder Schließelemente von Schranktüren 40 Platz finden. Die Schranktür 40 ist mit einem abgekanteten Rand 41 versehen. In den Eckbereichen der Schranktür 40 sind Scharnierhülsen 42 als Scharnierelemente angebracht, die mit ihren Aufnahmen 44 mit den Aufnahmen der Scharnierelemente 45, die an dem Übergangsabschnitt 13 des Rahmenschenkels 10 angebracht sind, fluchten und Scharnierbolzen aufnehmen. Das Scharnierelement 45 weist Befestigungsaufnahme 46 auf, über die es an dem Übergangsabschnitt 13 angeschraubt werden kann, der mit entsprechenden Befestigungsaufnahmen 35 versehen ist. An dem Profilseitenabschnitt 12 kann ein mit Rand 51 versehenes Wandelement 50 angebracht werden, welches in an sich bekannter Weise mit dem Profilabschnitt 12 verschraubt werden kann, wie die angedeutete Verbindungslinie zeigt. Die Schranktür 40 kann auf der Innenseite mit einem Rahmen 43 versteift sein.

Der Übergangsabschnitt 13 geht bei dem Rahmenschenkel 10 nach Fig. 1 über zwei Verbindungsabschnitte 14 und 15, die senkrecht zu den Profilseitenabschnitten 11 und 12 stehen, in diese über, wobei sich jeweils ein konvex nach außen gewölbter Dichtungsabschnitt 18 bzw. 19 und ein konvex nach innen gewölbter Aufnahmeabschnitt 16 bzw. 17 anschließt. Mit Hilfe der Dichtungsabschnitte 18 und 19 kann mit einem an der Schranktür 40 angebrachten Dichtungselement und einem an dem Wandelement 50 angebrachten Dichtungselement ein dichter Abschluß erreicht werden.

In die Aufnahmeabschnitte 16 und 17 kann auch je ein Dichtungselement eingelegt werden.

An die dem Übergangsabschnitt 13 abgekehrten Enden der Profilseitenabschnitte 11 und 12 schließen sich jeweils zwei nach innen abgebogene Endabschnitte 20 und 24 bzw. 21 und 25 und ein nach außen abgebogener Endabschnitt 26 bzw. 27 an. Diese Endabschnitte versteifen den als offenes Hohlprofil ausgebildeten Rahmenschenkel 10, wobei in die Endabschnitte 20 und 21 Reihen von Befestigungsaufnahmen 22 und 23 eingebracht sind, über die Einbauten am Rahmengestell befestigt werden können. Der Rahmenschenkel 10 ist symmetrisch zu der Diagonalen 60 aufgebaut und erlaubt mit der freigesparten Außeneckkante ein einfaches Anlenken der Schranktür 40, da genügend Raum zur Unterbringung der Scharnierelemente 45 und von Schließelementen auf der Schießseite der Schranktür 40 vorhanden ist. Da das Profil des Rahmenschenkels 10 zur Diagonlane 60 symmetrisch ist, können an dem Rahmenschenkel 10 die Schranktür 40 und das Wandelement 50 auch vertauscht angebracht werden. Es ist lediglich das Scharnierelement 45 bzw. das Schießelement um 180° verdreht am Rahmenschenkel 10 anzubringen. Auf diese Weise kann am Schaltschrank die Vorder- und/oder die Rückseite mit einer Schranktür 40 verchlossen werden oder es können Schranktüren 40 an der einen und/oder anderen Seite des Schaltschrankes angebracht werden.

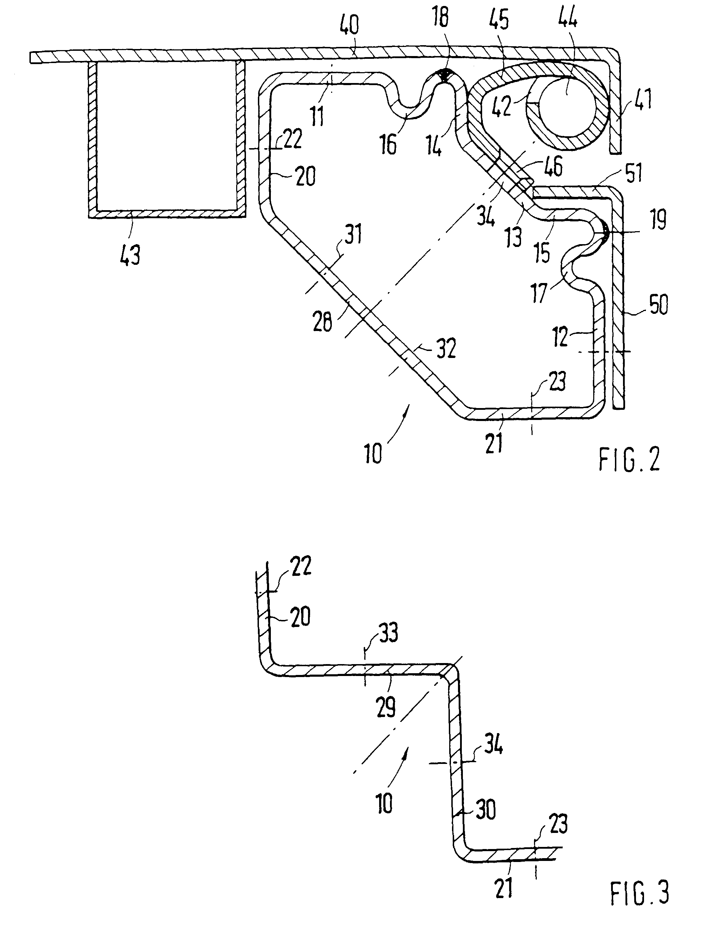

Wie am Ausführungsbeispiel nach Fig. 2 gezeigt ist, können die vertikalen Rahmenschenkel 10 des Rahmengestelles auch als geschlossenes Hohlprofil ausgebildet sein, das wiederum zur Diagonale 60 zwischen den Profilseitenabschnitten 11 und 12 symmetrisch ist. Dabei gehen die dem Übergangsabschnitt 13 abgekehrten Enden der Profilseitenabschnitte 11 und 12 jeweils über einen senkrecht nach innen gebogenen Endabschnitt 20 und 21 in einen Verbindungsabschnitt 28 über, der mit zwei Reihen von Befestigungsaufnahmen 31 und 32 versehen ist.

Die Profilseitenabschnitte 11 und 12 sind mit Befestigungsaufnahmen versehen, um Wandelemente 50 anschrauben zu können. Die Reihen von Befestigungsaufnahmen 22,23 und 31,32 in den Endabschnitten 20 und 21 sowie dem Verbindungsabschnitt 28 dienen als Befestigungsmöglichkeiten für Einbauten, Montageschienen und dgl.

Schließlich zeigt Fig. 3 einen Ausschnitt einer Variante des Ausführungsbeispiel es nach Fig. 2, bei welcher die Endabschnitte 20 und 21 noch einmal nach innen abgebogen sind und mit den Endabschnitten 29 und 30 das Profil schließen. Dabei können auch die rechtwinklig zueinander stehenden Endabschnitte 29 und 30 mit Reihen von Befestigungsaufnahmen 33 und 34 versehen sein, wobei diese Endabschnitte 29 und 30 eine Aufnahme bilden, in die ein zusätzliches Profil eingesetzt und mit dem Rahmenschenkel 10 verbunden werden kann.

In allen Ausführungsbeispielen kann die Schranktür 40 und das Wandelement 50 vertauscht am Rahmenschenkel 10 angebracht werden und anstelle der Scharnierseite der Schranktür 40 kann auch die Schließseite der Schranktür 40 dem Rahmenschenkel 10 zugekehrt sein, wobei anstelle von Scharnierelementen 45 Schließelemente am Rahmengestell befestigt sind.

## Patentansprüche

1. Rahmengestell für einen Schaltschrank, das aus Rahmenschenkeln (10) zusammensetzbar oder zusammengesetzt ist, bei dem an den vertikalen Rahmenschenkeln (10) Scharnierelemente (45) und Schließelemente für Schranktüren anbringbar oder angebracht sind und zumindest die vertikalen Rahmenschenkel (10) zwei den angrenzenden beiden Außenseiten des Rahmengestelles zugekehrte Profilseitenabschnitte (11, 12) aufweisen, die im gemeinsamen Eckbereich über einen Übergangsabschnitt (13) ineinander übergehen, welcher senkrecht zur Diagonale (60) zwischen den beiden Profilseitenabschnitten (11, 12) steht,
dadurch gekennzeichnet, daß an dem Übergangsabschnitt Verbindungsabschnitte (14, 15) angeordnet sind, die über einen konvex nach außen gewölbten, einen Dichtungssteg bildenden Dichtungsabschnitt (18, 19) und einen anschließenden, konvex nach innen gewölbten, eine nutartige Dichtungsaufnahme bildenden Aufnahmeabschnitt (16, 17) in die Profilseitenabschnitte (11, 12) übergehen.

2. Rahmengestelle nach Anspruch 1,
dadurch gekennzeichnet, daß der Verbindungsabschnitt (14,15) senkrecht zu dem zugeordneten Profilseitenabschnitt (11,12) steht.

3. Rahmengestell nach Anspruch 1 oder 2,
dadurch gekennzeichnet,
daß die Rahmenschenkel (10) als offenes, zur Diagonale (60) symmetrisches Hohlprofil ausgebildet sind.

4. Rahmengaestell nach Anspruch 3,
dadurch gekennzeichnet,
daß die dem Übergangsabschnitt (13) abgekehrten Enden der Profilseitenabschnitte (11, 12) jeweils in zwei rechtwinklig nach innen und einen rechtwinklig nach außen abgebogene Endabschnitt (20, 21; 24, 25; 26,27) auslaufen, wobei die nach außen abgebogenen Endabschnitte (27, 27) im gleichen Abstand zur Diagonale (60) enden (Fig. 1).

5. Rahmengestell nach Anspruch 1 oder 2,
dadurch gekennzeichnet,
daß die Rahmenschenkel (10) als geschlossenes, zur Diagonale (60) symmetrisches Hohlprofil ausgebildet sind.

6. Rahmengestell nach Anspruch 5,
dadurch gekennzeichnet,
daß die dem Übergangsabschnitt (13) abgekehrten Enden der Profilseitenabschnitte (11,12) über jeweils einen rechtwinklig nach innen gebogenen Endabschnitt (20, 21) und einen diese verbindenden Verbindungsabschnitt (28) miteinander verbunden sind (Fig. 2).

7. Rahmengestell nach einem der vorhergehenden Ansprüche
dadurch gekennzeichnet,
daß die dem Übergangsabschnitt (13) abgekehrten Enden der Profilseitenabschnitte (11, 12) über jeweils zwei rechtwinklig nach innen abgebogene Endabschnitte (20, 21; 29,30) miteinander verbunden sind (Fig. 3).

8. Rahmengestell nach einem der Ansprüche 1 bis 7,
dadurch gekennzzeichnet,
daß die Endabschnitte (20, 21; 29, 30) und/oder der Verbindungsabschnitt (28) mit Reihen von Befestigungsaufnahmen (22, 23; 33, 34; 31, 32) versehen sind.

9. Rahmengestell nach einem der Ansprüche 1 bis 8,
dadurch gekennzeichnet,
daß die Übergangsabschnitte (13) der Rahmenschenkel (10) mit Befestigungsaufnahmen (34) versehen sind.

## Claims

1. Framework for a switchgear cabinet, which is or may be assembled from frame portions (10), in which hinge elements (45) and closure elements for cabinet doors are attached or attachable to the vertical frame portions (10), and at least the vertical frame portions (10) comprise two lateral profile portions (11, 12) facing the two abutting external sides of the framework, said lateral profile portions extending into one another in the common corner region via a transitional portion (13) which is perpendicular to the diagonal (60) between the two lateral profile portions (11, 12), characterised in that connection portions (14, 15) are disposed on the transitional portion, said connection portions extending into the lateral profile portions (11, 12) via a convex, outwardly curved sealing portion (18, 19), which forms a sealing web, and a subsequent convex, inwardly curved receiving portion (16, 17), which forms a groove-like sealing receiving means.

2. Framework according to claim 1, characterised in that the connection portion (14, 15) is perpendicular to the associated lateral profile portion (11, 12).

3. Framework accordinq to claim 1 or 2, characterised in that the frame portions (10) are configured as an open hollow profile, which is symmetrical relative to the diagonal (60).

4. Framework according to claim 3, characterised in that the ends of the lateral profile portions (11, 12) remote from the transitional portion (13) each extend into two end portions (20, 21; 24, 25), which are bent inwardly at right angles, and one end portion (27, 27), which is bent outwardly at right angles, the outwardly bent end portions (26, 27) ending at the same distance from the diagonal (60) (Fig. 1).

5. Framework according to claim 1 or 2, characterised in that the frame portions (10) are configured as a closed hollow profile, which is symmetrical relative to the diagonal (60).

6. Framework according to claim 5, characterised in that the ends of the lateral profile portions (11, 12) remote from the transitional portion (13) are respectively interconnected via an end portion (20, 21), which is bent inwardly at right angles, and a connection portion (28) which connects such (Fig. 2).

7. Framework according to one of the preceding claims, characterised in that the ends of the lateral profile portions (11, 12) remote from the transitional portion (13) are respectively interconnected via two end portions (20, 21; 29, 30), which are bent inwardly at right angles (Fig. 3).

8. Framework according to one of claims 1 to 7, characterised in that the end portions (20, 21; 29, 30) and/or the connection portion (28) are provided with rows of mounting supports (22, 23; 33, 34; 31, 32).

9. Framework according to one of claims 1 to 8, characterised in that the transitional portions (13) of the frame portion (10) are provided with mounting supports (34).

## Revendications

1. Bâti pour armoire de distribution, pouvant être assemblé ou étant assemblé d'ailes d'encadrement (10), dans lequel des éléments de charnière (45) et des éléments de fermeture pour portes d'armoire peuvent être ou sont fixés aux ailes d'encadrement verticales (10) et dans lequel tout au moins les ailes d'encadrement verticales (10) présentent deux tronçons profilés latéraux (11, 12) faisant face aux deux côté latéraux limitrophes du bâti, tronçons (11, 12) qui dans la zone d'angle commune se raccordement par un tronçon de transition (13), lequel est perpendiculaire à la diagonale (60) entre les deux tronçons profilés latéraux (11, 12),
caractérisé des tronçons de jonction (14, 15) sont disposés sur le tronçon de liaison, lesdits tronçons de jonction se raccordant aux tronçons profilés latéraux (11, 12) par l'intermédiaire d'un tronçon d'étanchéité (18, 19) bombé de manière convexe vers l'extérieur et constituant un joint d'étanchéité suivi d'un tronçon de réception (16, 17) bombé de manière convexe vers l'intérieur et constituant un logement en forme d'encoche pour joint.

2. Bâti pour armoire de distribution suivant la revendication 1,
caractérisé en ce que le tronçon de jonction (14, 15) est perpendiculaire au tronçon profilé latéral (11, 12) associé.

3. Bâti pour armoire de distribution suivant la revendication 1 ou 2,
caractérisé en ce que les ailes d'encadrement (10) ont la forme d'un profilé creux symétrique par rapport à la diagonale.

4. Bâti pour armoire de distribution suivant la revendication 3,
caractérisé en ce que les extrémités non orientées vers le tronçon de transition (13) des tronçons profilés latéraux (11, 12) se terminent chacune par deux tronçons coudés à angle droit vers l'intérieur et par un tronçon coudé à angle droit vers l'extérieur (20, 21; 24, 25; 26, 27), les tronçons terminaux coudés vers l'extérieur (26, 27) étant situés à distance égale de la diagonale (60).

5. Bâti pour armoire de distribution suivant la revendication 1 ou 2,
caractérisé en ce que les ailes d'encadrement (10) ont la forme d'un profilé creux fermé symétrique par rapport à la diagonale (60).

6. Bâti pour armoire de distribution suivant la revendication 5,
caractérisé en ce que les extrémités non orientées vers le tronçon de transition (13) des tronçons profilés latéraux (11, 12) sont reliées l'une à l'autre par l'intermédiaire d'un tronçon terminal coudé à angle droit vers l'intérieur (20, 21) et par un tronçon de liaison (28) qui relie l'un à l'autre les tronçons terminaux (Fig. 2).

7. Bâti pour armoire de distribution suivant l'une quelconque des revendications précédentes,
caractérisé en ce que les extrémités non orientées vers le tronçon de transition (13) des tronçons profilés latéraux (11, 12) sont reliées l'une à l'autre par l'intermédiaire de deux tronçons terminaux (20, 21; 29, 30) coudés à angle droit vers l'intérieur (Fig. 3).

8. Bâti pour armoire de distribution suivant l'une quelconque des revendications de 1 à 7,
caractérisé en ce que les tronçons terminaux (20, 21; 29, 30) et/ou le tronçon de liaison (28) sont dotés de séries de logements de fixation (22, 23; 33, 34; 31, 32).

9. Bâti pour armoire de distribution suivant l'une quelconque des revendications de 1 à 8
caractérisé en ce que les tronçons de transition (13) des ailes d'encadrement (10) sont dotés de logements de fixation (34).
